# EUROPEAN PATENT APPLICATION

(11) **EP 2 800 066 A1**
(43) Date of publication of application: **05.11.2014**
(21) Application number: 14166327.8
(22) Date of filing: 29.04.2014
(51) Int. Cl.: G07C 5/08

(54) **Vehicular image processing apparatus and method of processing event using the same**

(30) Priority: 29.04.2013 KR 20130047787
(71) Applicant: Thinkware Systems Corporation, Gyeonggi-do 463-400 (KR); Intellectual Discovery Co., Ltd., Gangnam-gu, Seoul 135-090 (KR)
(72) Inventor: Kim, Hyung Chul, 143-769 Seoul (KR)
(74) Representative: Nederlandsch Octrooibureau

(57) **Abstract**

Provided are a vehicular image processing apparatus and a method of processing an event using the same that may prevent unnecessary event records from being generated in a driving state while the vehicular image processing apparatus, for example, a vehicular black box, is performing ordinary recording, and may block event recording to be performed through an impact sensor in an uneven zone, for example, a speed bump zone and a construction zone, thereby increasing data usage and utilization.

## Description

### BACKGROUND

### 1. Field of the Invention

The present invention relates to a vehicular image processing apparatus, and more particularly, to a vehicular image processing apparatus and a method of processing an event using the same that may efficiently process an event recorded in a driving state while the vehicular image processing apparatus is performing normal recording.

### 2. Description of the Related Art

Recently, reliance on objective data to investigate a cause of a traffic accident and to minimize a dispute between parties involved in the traffic accident during a traffic accident settlement process is an ever increasing necessity. In light of such a need, a number of vehicle owners install an apparatus similar to a black box of an aircraft in a vehicle. Many methods of utilizing data of a black box as objective data for an accident settlement are being developed. In this regard, mandatory installation of a vehicular black box is recommended in numerous countries.

A currently commercialized vehicular black box product is used to store event occurrence data or ordinarily recorded data in an internal memory. To share the stored data, a storage device of the black box may need to be connected to a web through an external device being connected to the Internet. In addition, a separate large-capacity external memory may be purchased and attached to increase a data storage capacity of the black box.

When a recording function is performed based on an event while a vehicle is being driven or parked, in particular, when event recording by an impact is performed, event records may be generated and data may be stored in an uneven zone or a zone with a number of speed bumps despite the absence of a substantially dangerous element. Thus, the data may occupy a large amount of a memory. In many cases, a largest portion of an event recorded image is unnecessarily recorded, and verifying an occurrence of an event is difficult. Due to the event recording, a large volume of data may be continuously stored in the memory and thus, an available time of the memory may decrease and an amount of data stored in the memory may increase.

### SUMMARY

An aspect of the present invention provides a vehicular image processing apparatus and a method of processing an event using the same that may prevent unnecessary event records from being generated in a driving state while the vehicular image processing apparatus, for example, a vehicular black box, is performing ordinary recording, and may block event recording to be performed through an impact sensor in an uneven zone, for example, a speed bump zone and a construction zone, thereby increasing data usage and utilization.

Another aspect of the present invention also provides a vehicular image processing apparatus and a method of processing an event using the same that may perform an accurate impact event by analyzing an impact pattern, perform event recording through more accurate interoperation with a database by combining location information, for example, a map, with the analyzed impact pattern, and perform event recording with respect to a dangerous situation by recognizing a pattern of a sudden unintended acceleration of a vehicle.

According to an aspect of the present invention, there is provided a vehicular image processing apparatus mountable in a vehicle, the apparatus including a camera module to acquire an external image of the vehicle, an impact detector to detect an impact event with respect to the vehicle, a storage unit to store impact information including at least one of a preset impact pattern and location information associated with the impact event, and a controller to determine whether an event recorded image with respect to the impact event is to be generated from the external image, based on the impact information.

The controller may generate the event recorded image when an impact pattern corresponding to the impact event does not match the preset impact pattern.

The impact information may further include a first impulse intensity, and the controller may generate the event recorded image when an impact pattern corresponding to the impact event does not match the preset impact pattern, and an impulse intensity corresponding to the impact event is greater than or equal to the first impulse intensity.

The impact information may further include a first impulse intensity and a second impulse intensity preset with respect to different situations, respectively, and the controller may generate the event recorded image when an impact pattern corresponding to the impact event does not match the preset impact pattern, and an impulse intensity corresponding to the impact event is greater than or equal to the first impulse intensity and the second impulse intensity.

The preset impact pattern may include a pattern associated with at least one of an impact and an oscillation occurring when the vehicle traverses an uneven zone.

The preset impact pattern may include a pattern having a greater change in acceleration set with respect to a Z axis than a change in acceleration set with respect to at least one of an X axis and a Y axis.

The location information associated with the impact event may include first location information for which the event recorded image is not to be generated, and the controller may generate the event recorded image when a location at which the impact event is detected does not correspond to the first location information.

The impact information may further include a first impulse intensity, and the controller may generate the event recorded image when a location at which the impact event is detected does not correspond to the first location information, and an impulse intensity corresponding to the impact event is greater than or equal to the first impulse intensity.

The controller may generate the event recorded image when a location at which the impact event is detected corresponds to the first location information, and an impact pattern corresponding to the impact event does not match the preset impact pattern.

The location information may include at least one of information related to a location of a speed bump and information related to a construction zone.

According to another aspect of the present invention, there is also provided an event processing method of a vehicular image processing apparatus mountable in a vehicle, the method including storing impact information comprising at least one of a preset impact pattern and location information associated with an impact event, acquiring an external image of the vehicle, detecting the impact event with respect to the vehicle, and determining whether an event recorded image with respect to the impact event is to be generated from the external image, based on the impact information.

The determining may include generating the event recorded image when an impact pattern corresponding to the impact event does not match the preset impact pattern.

The impact information may further include a first impulse intensity, and the generating may include generating the event recorded image when an impact pattern corresponding to the impact event does not match the preset impact pattern, and an impulse intensity corresponding to the impact event is greater than or equal to the first impulse intensity.

The impact information may further include a first impulse intensity and a second impulse intensity preset with respect to different situations, respectively, and the generating may include generating the event recorded image when an impact pattern corresponding to the impact event does not match the preset impact pattern, and an impulse intensity corresponding to the impact event is greater than or equal to the first impulse intensity and the second impulse intensity.

The preset impact pattern may include a pattern associated with at least one of an impact and an oscillation occurring when the vehicle traverses an uneven zone.

The present impact pattern may include a pattern having a greater change in acceleration set with respect to a Z axis than a change in acceleration set with respect to at least one of an X axis and a Y axis.

The location information associated with the impact event may include first location information for which the event recorded image is not to be generated, and the determining may include generating the event recorded image when a location at which the impact event is detected does not correspond to the first location information.

The impact information may further include a first impulse intensity, and the generating may include generating the event recorded image when a location at which the impact event is detected does not correspond to the first location information, and an impulse intensity corresponding to the impact event is greater than or equal to the first impulse intensity.

The generating may include generating the event recorded image when a location at which the impact event is detected corresponds to the first location information, and an impact pattern corresponding to the impact event does not match the preset impact pattern.

The location information may include at least one of information related to a location of a speed bump and information related to a construction zone.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a block diagram illustrating a configuration of a vehicular image processing apparatus according to an embodiment of the present invention;
FIG. 2 is a flowchart illustrating an event processing method of a vehicular image processing apparatus according to an embodiment of the present invention;
FIG. 3 is a flowchart illustrating an event processing method of a vehicular image processing apparatus according to another embodiment of the present invention;
FIG. 4 is a flowchart illustrating an event processing method of a vehicular image processing apparatus according to still another embodiment of the present invention; and
FIG. 5 is a flowchart illustrating an event processing method of a vehicular image processing apparatus according to yet another embodiment of the present invention.

### DETAILED DESCRIPTION

Purposes, features and advantages of the present invention will clearly appear through the detailed descriptions given below with reference to the accompanying drawings. Hereinafter, exemplary embodiments are described in detail by referring to the drawings, wherein like reference numerals refer to the like elements throughout. When it is determined that a detailed description is related to a related known function or configuration which may make the purpose of the present disclosure unnecessarily ambiguous in the description, such a detailed description will be omitted.

Hereinafter, a vehicular image processing apparatus according to the present invention will be described in more detail with reference to the accompanying drawings. The suffixes "module" and "unit" used for constituent elements disclosed in the following descriptions are merely intended for ease of description of the specification, and the suffixes themselves do not provide any special meaning or function. Therefore, it should be noted that the suffixes "module" and "unit" may be used interchangeably.

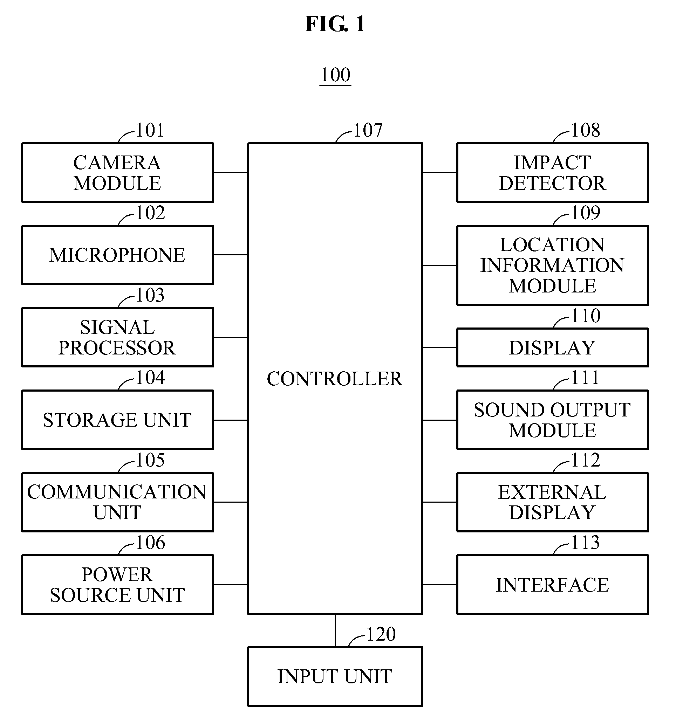

FIG. 1 is a block diagram illustrating a configuration of a vehicular image processing apparatus 100 according to an embodiment of the present invention.

The image processing apparatus 100 for a vehicle may also be referred to as a black box apparatus.

Referring to FIG. 1, the image processing apparatus 100 may include a camera module 101, a microphone 102, a signal processor 103, a storage unit 104, a communication unit 105, a power source unit 106, a controller 107, an impact detector 108, a location information module 109, a display 110, a sound output module 111, an external display 112, an interface 113, and an input unit 120.

The camera module 101 may acquire an external image. For example, the camera module 101 may photograph a front, rear, side, or internal image of the vehicle, and transmit the photographed image to the signal processor 103. The photographed image may be compressed by the signal processor 103 and stored in the storage unit 104, or may be immediately stored in the storage unit 104 without being compressed. Based on a system configuration, the camera module 101 may include a single camera to photograph a front image. In a case in which the camera module 101 includes a plurality of cameras, each camera may be directed to a front, rear, side, and interior of the vehicle using various methods, based on a purpose.

The microphone 102 may record a voice or a sound originating internally or externally and transmit the recorded voice or sound to the signal processor 103. The transmitted recorded voice or sound may be compressed by the signal processor 103 and stored in the storage unit 104, or may be immediately stored in the storage unit 104 without being compressed. The recorded voice or sound may relate to a sound made by an external impact, or a situation occurring internally and externally. The recorded voice or sound and the photographed image may be helpful in recognizing conditions at the time of an accident.

The signal processor 103 may perform compression to reduce a volume of image data photographed by the camera module 101. The image data may be provided in a form of a number of frames gathered based on a time axis. The image data may correspond to successive photographs captured during a provided period of time. Since a volume of such images may be overly great without compression, storing the original images in a memory may be inefficient. Thus, compression may be performed on digitally-converted images. A video may be compressed using a method using a characteristic of a vision sensitive to a low-frequency component, a spatial correlation, and a correlation between frames. Since original data may be lost due to compression, the image data may need to be compressed at a suitable ratio to verify conditions related to a vehicle at a time of a traffic accident. A video may be compressed using one of various video codecs, for example, H.264, moving picture experts group (MPEG)-4, H.263, and H.265/high efficiency video coding (HEVC). The image data may be compressed using a method supported by the vehicular image processing apparatus 100.

The signal processor 103 may compress data recorded by the microphone 102. The signal processor 103 may compress and encode the recorded image and audio data to restrict access to the data.

The storage unit 104 may store the recorded image and audio data as a single file or two files based on a storage period. For example, when the storage period corresponds to 30 seconds, an image and a sound recorded for the first 30 seconds may be compressed and stored as a video file, and an image and a sound recorded for another 30 seconds may be continuously compressed and stored.

The storage unit 104 may store different types of data in different storage areas partitioned based on a recording mode. For example, data recorded during driving and data recorded during parking may be stored in different folders, and data recorded at ordinary times and data recorded by an event may be stored in different folders.

The storage unit 104 may be provided in an internal portion of the vehicular image processing apparatus 100, provided to be detachable through a port provided in the vehicular image processing apparatus 100, or provided in an external portion of the vehicular image processing apparatus 100. When the storage unit 104 is provided in the internal portion of the vehicular image processing apparatus 100, the storage unit 104 may be provided in a form of a disk drive or a flash memory. When the detachable storage unit 104 is provided in the vehicular image processing apparatus 100, the storage unit 104 may be provided in a form of a secure digital (SD) card, a micro SD card, or a universal serial bus (USB) memory. When the storage unit 105 is provided in the external portion of the vehicular image processing apparatus 100, the storage unit 105 may be present in another device or a storage space of a server through the communication unit 105.

The communication unit 105 may configure a connection between the vehicular image processing apparatus 100 and a server, another vehicle, or another device to exchange a recorded image or sound. In addition, the communication unit 105 may enable vehicular information or environmental information to be transmitted to and received from the server, the other vehicle, or the other device. The communication unit 105 may support wireless networks, for example, wireless-fidelity (Wi-Fi), Bluetooth, third generation (3G), long-term evolution (LTE), worldwide interoperability for microwave access (WiMAX), and wireless gigabit alliance (WiGig), and wired networks, for example, Ethernet, and a modulator-demodulator (MODEM).

The power source unit 106 may receive a power from an external power source or an internal battery, and supply operational power to the vehicular image processing apparatus 100. When a vehicle is started, a power of the vehicle may be applied to the vehicular image processing apparatus 100 to charge a chargeable battery thereof. When an engine of the vehicle is stopped, the power of the rechargeable battery may be supplied to the vehicular image processing apparatus 100.

The controller 107 may generally control an overall operation of the vehicular image processing apparatus 100. The controller 107 may include a multimedia module to play back multimedia data. The multimedia module may be included in the controller 107, or provided separately from the controller 107.

The controller 107 may set an operating mode of the vehicular image processing apparatus 100 based on a signal of the impact detector 108 or whether the vehicle is travelling. The controller 107 may perform an ordinary recording function while the vehicle is travelling, and perform an event recording function when an impact event is detected by the impact detector 108. The controller 107 may control the vehicular image processing apparatus 100 to perform a parking recording function by determining the impact event detected by the impact detector 108 or a movement of an object recorded by the camera module 101 while the vehicle is being parked.

The impact detector 108 may detect an impact event associated with at least one of an impact and an oscillation with respect to the vehicle. For example, the impact detector 108 may detect, as the impact event, an event in a case in which an impact applied to the vehicle is detected or a change in acceleration is greater than or equal to a predetermined level, and transmit information related to the impact event to the controller 107. The impact detector 108 may include an acceleration sensor, and an earth magnetic field sensor to detect an impact or an acceleration.

The location information module 109 may correspond to a module to verify or obtain a location of the vehicular image processing apparatus 100. A representative example of the location information module is a global positioning system (GPS) module.

The location information module 109 may continuously calculate a current location of the vehicle in real time, and calculate speed information of the vehicle based on calculated locations.

The display 110 may display or output information processed by the vehicular image processing apparatus 100.

For example, the display 110 may enable the image and sound recorded by the camera module 101 to be displayed in real time or at a desired time. The display 110 may display recording settings to be easily set by the controller 107, and may enable a user to easily select and set a desired function through a touch input.

The display 110 may include at least one of a liquid crystal display (LCD), a thin film transistor-liquid crystal display (TFT LCD), an organic light emitting diode (OLED), a flexible display, and a three-dimensional (3D) display.

In a case in which the display 110 and a sensor configured to sense a touch motion, hereinafter, referred to as a "touch sensor", are provided in a form of a mutual layer, hereinafter, simply referred to as a "touch screen", the display 110 may be used as both an input device and an output device. The touch sensor may be provided in a form of, for example, a touch film, a touch sheet, and a touch pad.

The sound output module 111 may output audio data received by the communication unit 105 or stored in the storage unit 104. The sound output module 111 may output an audio signal related to a function performed by the vehicular image processing apparatus 100.

The sound output module 111 may include a receiver, a speaker, and a buzzer. The sound output module 111 may output a sound through an earphone jack. A user may connect an earphone to the earphone jack, and hear an output sound.

The external display 112 may refer to a light emitting device, for example, a light emitting diode (LED), and a light. The external display 112 may inform about an operating state of the vehicular image processing apparatus 100, or may provide a light for an easy control of the vehicular image processing apparatus 100, for example, a button or a touch.

The interface 113 may act as a bridge between the vehicular image processing apparatus 100 and all external devices to be connected to the vehicular image processing apparatus 100. The interface 113 may receive data or a power from an external device and transfer the data or the power to each constituent element in the vehicular image processing apparatus 100, or may enable internal data of the vehicular image processing apparatus 100 to be transmitted to an external device. For example, the interface 113 may include a wired/wireless headset port, an external charger porter, a wired/wireless data port, a memory card port, a port configured to connect a device including an identification module, an audio input/output (I/O) port, a video I/O port, and an earphone port.

A user may generate input data to control an operation of the vehicular image processing apparatus 100 through the input unit 120. The input unit 120 may include a key pad, a dome switch, a resistive/capacitive touch pad, a jog wheel, and a jog switch.

The vehicular image processing apparatus 100 may generate an event recorded image by combining location information, for example, a map.

Location information may be verified using GPS signals of a navigation terminal that may transmit information to and receive information from the vehicular image processing apparatus 100 or the location information module 109 of the vehicular image processing apparatus 100 in a wired or wireless manner. Location information, for example, a map, corresponding to the verified location information, and information on a construction zone and a speed bump zone in a periphery may be read using the vehicular image processing apparatus 100.

The controller 107 may enable settings to prevent generation of an event recorded image with respect to an event record request generated by an impact occurring in a speed bump zone or a construction zone, irrespective of a collision with another vehicle or an external building. For example, the controller 107 may determine whether an event recorded image with respect to an impact event is to be generated from an external image, based on impact information. The storage unit 104 may store the impact information including a preset impact pattern, location information associated with an impact event, a first impulse intensity, and a second impulse intensity.

When a vehicle is travelling and a current location corresponds to a speed bump zone or a construction zone, the controller 107 may increase a sensitivity of a sensor with respect to an impact or analyze an input pattern of the sensor to prevent an occurrence of an event due to an unevenness in the speed bump zone or the construction zone.

The controller 107 may generate the event recorded image when an impact pattern corresponding to the impact event does not match the preset impact pattern. The controller 107 may enable settings to verify a form of a movement occurring on X, Y, and Z axes of an acceleration sensor and ignore an event verified to be a movement due to an unevenness in a speed bump zone or a construction zone. For example, a pattern input into the acceleration sensor in a speed bump zone may exhibit a relatively great change with respect to a Z axis and relatively modest changes with respect to an X axis and a Y axis. In a case of a collision with another vehicle or a building, a pattern input into the acceleration sensor may exhibit relatively great changes with respect to the X axis and the Y axis and a relatively modest change with respect to the Z axis. The changes with respect to the X, Y, and Z axes may include changes in acceleration, respectively. In an uneven zone, for example, a speed bump zone or a construction zone, the sound output module 111 may output a sound to inform a driver of the corresponding zone.

The controller 107 may perform an event recording function through separate interrupt processing when a free fall or a particularly significant oscillation or impact of the vehicle is detected as a result of determining an impulse intensity measured by the acceleration sensor.

When the current location of the vehicle is determined to be a speed bump zone or a construction zone, the controller 107 may adjust the sensitivity of the sensor or analyze a pattern of the impact or oscillation, thereby ignoring an event record request and performing the ordinary recording function.

As described above, in an embodiment, an event record request may be treated as an exception by being ignored and not performing a recording function with respect to the event record request.

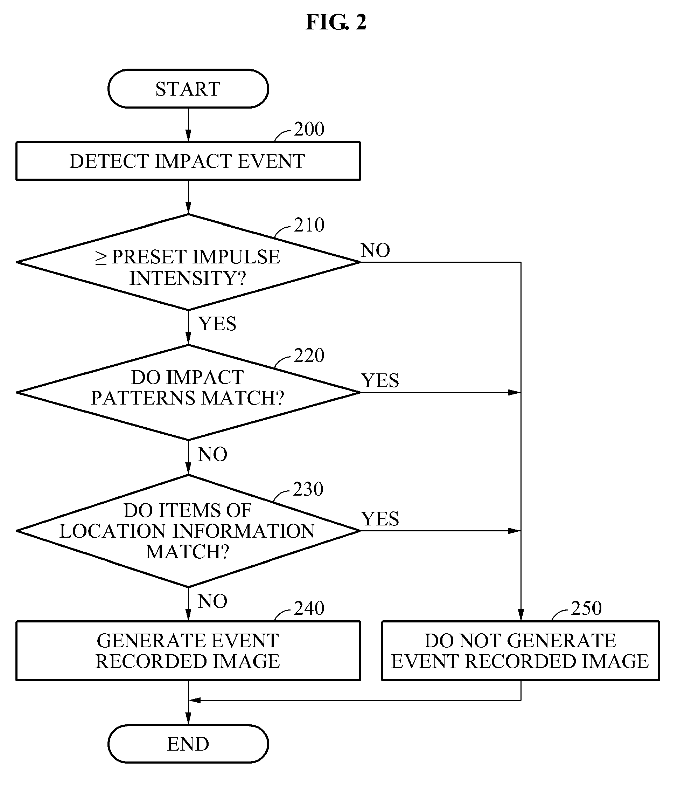

FIG. 2 is a flowchart illustrating an event processing method of a vehicular image processing apparatus according to an embodiment of the present invention. The event processing method of FIG. 2 may be implemented by the vehicular image processing apparatus 100 of FIG. 1.

Hereinafter, the event processing method and an operation of the vehicular image processing apparatus 100 to implement the same will be described in detail.

Referring to FIG. 2, when an impact event is detected in operation 200, the controller 107 may verify whether an impulse intensity corresponding to the impact event is greater than or equal to a preset impulse intensity in operation 210. For example, the controller 107 may verify whether the impulse intensity corresponding to the impact event is greater than or equal to a first impulse intensity.

The preset impulse intensity, for example, the first impulse intensity, may be set by a user, automatically set by the controller 107, or preset by a manufacturer of the vehicular image processing apparatus 100.

When it is verified in operation 210 that the impulse intensity corresponding to the detected impact event is not greater than or equal to the preset impulse intensity, the controller 107 may not generate an event recorded image in operation 250.

When it is verified in operation 210 that the impulse intensity corresponding to the detected impact event is greater than or equal to the present impulse intensity, the controller 107 may verify whether an impact pattern corresponding to the impact event matches an impact pattern stored in a database in operation 220.

The impact pattern stored in the database may correspond to analyzed information on an impact pattern with respect to X, Y, and Z axes.

An impulse intensity with respect to a speed bump zone or a construction zone may be set separately. A minimum impulse intensity, for example, the first impulse intensity, may be set to generate an event with respect to a general impact, and a separate minimum impulse intensity, for example, a second impulse intensity, may be set for a speed bump zone or a construction zone. In a speed bump zone or a construction zone, event recording may be performed only when an impulse intensity satisfying the two minimum impulse intensitys, for example, the first impulse intensity and the second impulse intensity, occurs.

In a speed bump zone or a construction zone, an impact pattern measured by the sensor may be verified and event records may be processed. A signal pattern with respect to impact information occurring from an internal sensor or an external sensor of the vehicular image processing apparatus 100, for example, a black box, may be acquired and applied through learning based on a driving speed of a vehicle in a speed bump zone or a construction zone.

Whether the signal pattern with respect to the impact information and the driving speed corresponds to impact information occurring in a speed bump zone or a construction zone may be verified. When the signal pattern does not correspond to an impact occurring in a speed bump zone or a construction zone, the event recording may be performed.

Even in an event exception zone, for example, a speed bump zone or a construction zone, an event image may be recorded rather than performing exception handling, for example, ignoring the impact event, with respect to an event by analyzing an impact pattern with respect to X, Y, and Z axes. Thus, actually required image recording with respect to an impact may be performed and not be omitted. For example, the controller 107 may generate the event recorded image when a location at which the impact event is detected corresponds to the location information stored in the database, and an impact pattern corresponding to the impact event does not match the preset impact pattern. The location information stored in the data base may include, for example, information on a location of a speed bump, and information related to a construction zone.

The event recording function may be performed by analyzing an impact pattern, irrespective of a speed bump zone, a construction zone, and an uneven zone. Event records by an impact pattern and other event recorded files may be stored in different folders. The event recording function may refer to a function to generate an event recorded image with respect to an impact event from an external image and manage the generated event recorded image separately from ordinary images.

When it is verified in operation 220 that the impact pattern corresponding to the impact event matches the impact pattern stored in the database, the controller 107 may not generate an event recorded image in operation 250.

As described above, the impact pattern stored in the database may correspond to an impact pattern that may occur in a speed bump zone or a construction zone for which generation of an event recorded image may be unnecessary.

When it is verified in operation 220 that the impact pattern corresponding to the impact event does not match the impact pattern stored in the database, the controller 107 may verify whether current location information corresponds to a location for which generation of an event recorded image is unnecessary, for example, a speed bump zone or a construction zone, in operation 230.

The location for which generation of an event recorded image is unnecessary may be registered in advance. For example, the storage unit 104 may store location information associated with an impact event including information on the location for which an event recorded image is not to be generated.

When it is verified in operation 230 that the current location information corresponds to the location for which generation of an event recorded image is unnecessary, the controller 107 may not generate an event recorded image in operation 250.

When it is verified in operation 230 that the current location information does not correspond to the location for which generation of an event recorded image is unnecessary, the controller 107 may generate an event recorded image in operation 240. The controller 107 may generate the event recorded image when the location at which the impact event is detected does not correspond to the location information stored in the database, and the impulse intensity corresponding to the impact event is greater than or equal to the first impulse intensity. The location information stored in the database may include, for example, information on a location of a speed bump, and information related to a construction zone.

The controller 107 may generate an ordinarily recorded image rather than an event recorded image when it is verified in operation 210 that the impulse intensity corresponding to the impact event is greater or equal to the preset impulse intensity, and the impact event corresponds to an impact occurring in a speed bump zone or a construction zone.

When an occurrence of an impact or an oscillation is verified, the controller 107 may receive a current location and additional information from an external navigation terminal capable of providing location information, for example, a map.

The controller 107 may continuously update the current location and the additional information, and use the updated information when an impact or an oscillation occurs.

According to the present embodiment, whether an event recorded image is to be generated may be determined by combining a database in which a pattern of an impact or an oscillation is recorded and a database storing location information. For example, the storage unit 104 may store a preset impact pattern, location information associated with an impact event, a first impulse intensity, and a second impulse intensity in a database. The preset impact pattern may include a pattern of an impact or an oscillation occurring when a vehicle traverses an uneven zone. The preset impact pattern may include a pattern having a greater change in acceleration set with respect to a Z axis than changes in acceleration set with respect to X and Y axes. The location information associated with the impact event may include information on a location for which an event recorded image is not to be generated, for example, information on a location of a speed bump and information related to a construction zone.

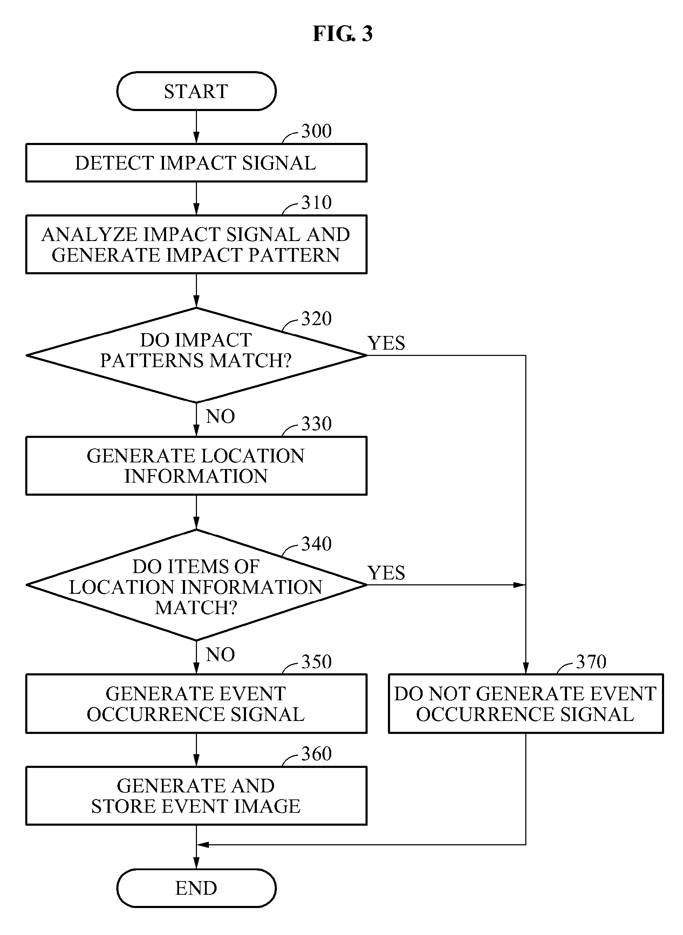

FIG. 3 is a flowchart illustrating an event processing method of a vehicular image processing apparatus according to another embodiment of the present invention. The event processing method of FIG. 3 may be implemented by the vehicular image processing apparatus 100 of FIG. 1.

Hereinafter, the event processing method and an operation of the vehicular image processing apparatus 100 to implement the same will be described in detail.

Referring to FIG. 3, when an impact signal is detected in operation 300, the controller 107 may analyze the impact signal and generate an impact pattern of the detected impact signal in operation 310.

In operation 320, the controller 107 may verify whether the impact pattern of the detected impact signal matches an impact pattern stored in a database. When the impact patterns match, the controller 107 may not generate an event occurrence signal in operation 370. When the event occurrence signal is not generated, an event recording function may not be performed.

When it is verified in operation 320 that the impact pattern of the detected impact signal does not match the impact pattern stored in the database, the controller 107 may generate location information in operation 330.

The location information generated in operation 330 may correspond to a current location of a vehicle.

In operation 340, the controller 107 may verify whether the location information obtained in operation 330 matches location information stored in the database.

The location information stored in the database may refer to information on a location for which generation of an event occurrence signal is unnecessary.

When it is verified in operation 340 that the obtained location information matches the location information stored in the database, the controller 107 may not generate an event occurrence signal in operation 370.

When it is verified in operation 340 that the obtained location information does not match the location information stored in the database, the controller 107 may generate an event occurrence signal in operation 350, and generate and store an event image in operation 360. The controller 107 may generate an event recorded image when a location at which an impact event is detected does not correspond to the location information stored in the database.

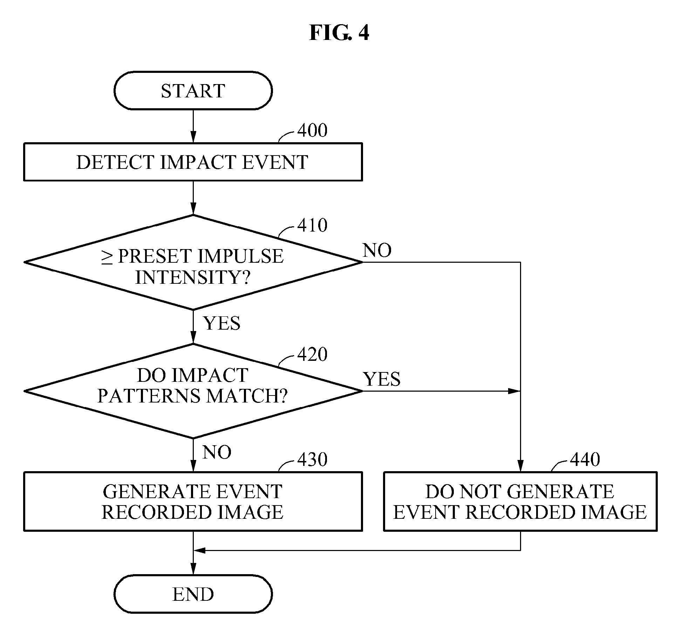

FIG. 4 is a flowchart illustrating an event processing method of a vehicular image processing apparatus according to still another embodiment of the present invention. The event processing method of FIG. 4 may be implemented by the vehicular image processing apparatus 100 of FIG. 1.

Hereinafter, the event processing method and an operation of the vehicular image processing apparatus 100 to implement the same will be described in detail.

Referring to FIG. 4, when an impact event is detected in operation 400, the controller 107 may verify whether an impulse intensity corresponding to the impact event is greater than or equal to a preset impulse intensity in operation 410.

When the impulse intensity corresponding to the impact event is not greater than or equal to the preset impulse intensity, the controller 107 may not generate an event recorded image in operation 440.

When the impulse intensity corresponding to the impact event is greater than or equal to the present impulse intensity, the controller 107 may verify whether an impact pattern corresponding to the impact event matches an impact pattern stored in a database in operation 420.

When it is verified in operation 420 that the impact pattern corresponding to the impact event matches the impact pattern stored in the database, the controller 107 may not generate an event recorded image in operation 440. When it is verified in operation 420 that the impact pattern corresponding to the impact event does not match the impact pattern stored in the database, the controller 107 may generate an event recorded image in operation 430.

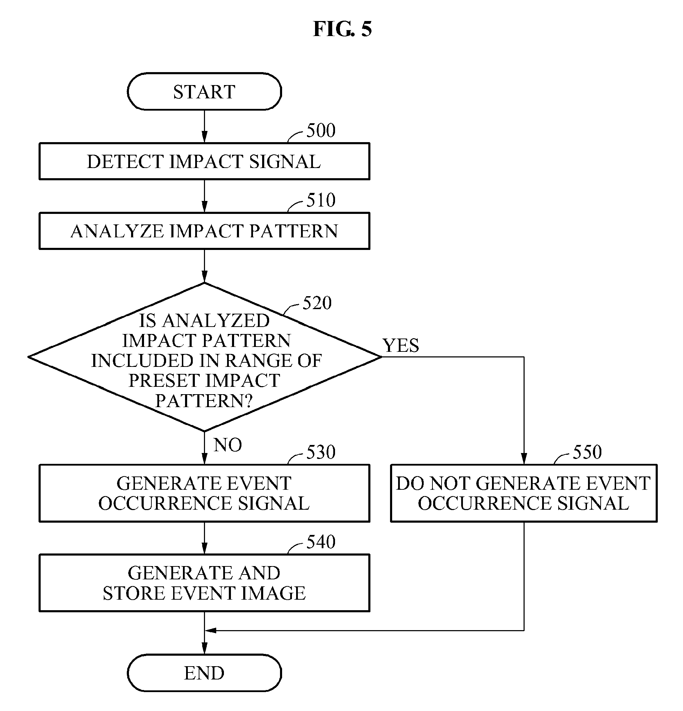

FIG. 5 is a flowchart illustrating an event processing method of a vehicular image processing apparatus according to yet another embodiment of the present invention. The event processing method of FIG. 5 may be implemented by the vehicular image processing apparatus 100 of FIG. 1.

Hereinafter, the event processing method and an operation of the vehicular image processing apparatus 100 to implement the same will be described in detail.

Referring to FIG. 5, when an impact signal is detected in operation 500, the controller 107 may analyze an impact pattern of a currently occurring impact based on the detected impact signal in operation 510.

In operation 520, the controller 107 may verify whether the analyzed impact pattern is included in a range of a preset impact pattern.

When it is verified in operation 520 that the analyzed impact pattern is included in the range of the preset impact pattern, the controller 107 may not generate an event occurrence signal in operation 550. When it is verified in operation 520 that the analyzed impact pattern is not included in the range of the preset impact pattern, the controller 107 may generate an event occurrence signal in operation 530, and generate and store an event image in operation 540.

The vehicular image processing apparatus and the method of processing the event using the same may achieve the following effects.

According to exemplary embodiments of the present invention, by generating an event recorded image of a black box through combination with location information, for example, a map, it is possible to prevent generation of an unnecessary event recorded image, increase an available capacity of a memory, reduce a possibility of a memory being damaged by frequent writing to an internal memory resulting from backups to be performed because of a lack of a capacity of the memory, and inform a user of a speed bump zone and a construction zone.

The event processing method according to the above-described exemplary embodiments of the present invention may be recorded in computer-readable media including program instructions to implement various operations embodied by a computer.

The event processing method may be executed as software. The elements of the present invention can be code segments which execute necessary tasks if the present invention is executed as software. Programs or code segments may be stored in a processor-readable medium or may be transmitted by a computer data signal combined with a carrier wave over a transmission medium or communication network.

The computer-readable media include any data storage device that can store data which can thereafter be read by a computer system. Examples of the computer-readable recording medium include read-only memories (ROMs), random-access memories (RAMs), compact disk (CD)-ROMs, digital video disk (DVD)-ROMs, DVD-RAMs, magnetic tapes, flappy disks, hard disks, and optical data storage devices. In addition, the computer-readable media may be distributed to computer systems over a network, in which computer-readable codes may be stored and executed in a distributed scheme.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims. The present invention is not limited to the above-described exemplary embodiments, but the entirety or part of the exemplary embodiments may be selectively combined to make various modifications.

## Claims

1. A vehicular image processing apparatus mountable in a vehicle, the apparatus comprising:
a camera module to acquire an external image of the vehicle;
an impact detector to detect an impact event with respect to the vehicle;
a storage unit to store impact information comprising at least one of a preset impact pattern and location information associated with the impact event; and
a controller to determine whether an event recorded image with respect to the impact event is to be generated from the external image, based on the impact information.

2. The apparatus of claim 1, wherein the controller generates the event recorded image when an impact pattern corresponding to the impact event does not match the preset impact pattern.

3. The apparatus of claim 2, wherein the impact information further comprises a first impulse intensity, and
the controller generates the event recorded image when an impact pattern corresponding to the impact event does not match the preset impact pattern, and an impulse intensity corresponding to the impact event is greater than or equal to the first impulse intensity.

4. The apparatus of claim 1, wherein the preset impact pattern comprises a pattern associated with at least one of an impact and an oscillation occurring when the vehicle traverses an uneven zone.

5. The apparatus of claim 1, wherein the preset impact pattern comprises a pattern having a greater change in acceleration set with respect to a Z axis than a change in acceleration set with respect to at least one of an X axis and a Y axis.

6. The apparatus of claim 1, wherein the location information associated with the impact event comprises first location information for which the event recorded image is not to be generated, and
the controller generates the event recorded image when a location at which the impact event is detected does not correspond to the first location information.

7. The apparatus of claim 6, wherein the impact information further comprises a first impulse intensity, and
the controller generates the event recorded image when a location at which the impact event is detected does not correspond to the first location information, and an impulse intensity corresponding to the impact event is greater than or equal to the first impulse intensity.

8. The apparatus of claim 6, wherein the controller generates the event recorded image when a location at which the impact event is detected corresponds to the first location information, and an impact pattern corresponding to the impact event does not match the preset impact pattern.

9. An event processing method of a vehicular image processing apparatus mountable in a vehicle, the method comprising:
storing impact information comprising at least one of a preset impact pattern and location information associated with an impact event;
acquiring an external image of the vehicle;
detecting the impact event with respect to the vehicle; and
determining whether an event recorded image with respect to the impact event is to be generated from the external image, based on the impact information.

10. The method of claim 9, wherein the determining comprises generating the event recorded image when an impact pattern corresponding to the impact event does not match the preset impact pattern.

11. The method of claim 10, wherein the impact information further comprises a first impulse intensity, and
the generating comprises generating the event recorded image when an impact pattern corresponding to the impact event does not match the preset impact pattern, and an impulse intensity corresponding to the impact event is greater than or equal to the first impulse intensity.

12. The method of claim 9, wherein the preset impact pattern comprises a pattern associated with at least one of an impact and an oscillation occurring when the vehicle traverses an uneven zone.

13. The method of claim 9, wherein the present impact pattern comprises a pattern having a greater change in acceleration set with respect to a Z axis than a change in acceleration set with respect to at least one of an X axis and a Y axis.

14. The method of claim 9, wherein the location information associated with the impact event comprises first location information for which the event recorded image is not to be generated, and
the determining comprises generating the event recorded image when a location at which the impact event is detected does not correspond to the first location information.

15. The method of claim 14, wherein the generating comprises generating the event recorded image when a location at which the impact event is detected corresponds to the first location information, and an impact pattern corresponding to the impact event does not match the preset impact pattern.
